# EUROPÄISCHE PATENTSCHRIFT

(11) **EP 3 021 782 B1**
(45) Veröffentlichungstag und Bekanntmachung des Hinweises auf die Patenterteilung: **10.06.2020**
(21) Anmeldenummer: 14741859.4
(22) Anmeldetag: 17.07.2014
(51) Int. Cl.: A61C 8/00

(54) **ZAHNIMPLANTAT MIT KORONALER NUTSTRUKTUR**
TOOTH IMPLANT WITH CORONAL GROOVE STRUCTURE
IMPLANT DENTAIRE À STRUCTURE RAINURÉE CORONALE

(30) Priorität: 17.07.2013 DE 102013107630
(43) Veröffentlichungstag der Anmeldung: 25.05.2016
(73) Patentinhaber: BEGO Implant Systems GmbH & Co. KG, 28359 Bremen (DE)
(72) Erfinder: FLACH, Matthias, 56075 Koblenz (DE); MEYER, Stephan, 28359 Bremen (DE)
(74) Vertreter: Eisenführ Speiser
(86) Internationale Anmeldenummer: PCT/EP2014/065435
(87) Internationale Veröffentlichungsnummer: WO 2015/007864

(56) Entgegenhaltungen:
- EP-A1- 2 510 899
- WO-A1-2007/107995
- WO-A1-2008/120877
- FR-A1- 2 942 952

## Beschreibung

Zahnimplantate sind ein Bestandteil eines Zahnimplantatsystems, das dazu dient, um extrahierte Zähne zu ersetzen. Das Zahnimplantat ist dabei derjenige Bestandteil des Zahnimplantatsystems, der in den Kieferknochen eingesetzt wird und darin eine feste Verankerung bereitstellen soll. Neben dem Zahnimplantat umfasst ein Zahnimplantatsystem weiterhin noch einen Aufbau, d er mit dem Zahnimplantat verbunden werden kann und den sichtbaren Teil des Zahnersatzsystems darstellt. Diese Aufbau umfasst typischerweise ein sogenanntes Zahnaufbauteil, das mit dem Zahnimplantat verbunden werden kann, hierzu kann typischerweise noch eine Schraube, die durch eine Öffnung im Zahnaufbauteil hindurch gesteckt und in einem Innengewinde im Zahnimplantat verschraubt wird, zum Einsatz kommen. Auf dem Zahnaufbauteil wird dann weiterhin eine Krone befestigt, welche die ursprüngliche Geometrie des ersetzten Zahnes nachempfindet und eine gute Funktionalität und Ästhetik im Zusammenspiel mit den anderen, benachbarten und gegenüberliegenden Zähnen des Patienten herstellen soll.

Neben diesen Zahnimplantatsystemen sind auch Zahnimplantatsysteme bekannt, bei denen Zahnaufbauteil und Krone als integrales Bauteil am Zahnimplantat befestigt werden.

Zur Befestigung des Zahnaufbau teils am Zahnimplantat sind verschiedene Konstruktionen bekannt. Eine weitverbreitete Methode besteht darin, das Zahnaufbauteil durch eine formschlüssige Verdrehsicherung im Zahnimplantat gegen Verdrehung zu sichern und mittels einer Schraube in einem Innengewinde im Zahnimplantat zu befestigen. Es sind aber auch andere Befestigungsmethoden bekannt, beispielsweise eine zementierte Befestigung, die ohne eine Verschraubung auskommt und als konische Steckverbindung ausgeführt sein kann.

Der Erfolg einer Behandlung mit einem Zahnimplantatsystem wird an der Funktionalität des implantierten Systems über den Nutzungszeitraum gemessen. Angestrebt wird, dem Patienten eine möglichst lebenslange Nutzung des Zahnimplantatsystems zu eröffnen. Ein wesentlicher Einflussfaktor beim Erfolg eines Zahnimplantatsystems ist die erfolgreiche und zu verlässige Verankerung des Zahnimplantats im Kieferknochen. Eine übliche Konstruktion v on Zahnimplantaten sieht hierbei vor, am Zahnimplantat ein Außengewinde vorzusehen, welches selbstschneidend sein kann. Dieses Außengewinde wird in eine vorbereitete Bohrung im Kieferknochen eingeschraubt und kann so für eine unmittelbar nach der Implantation wirkende Stabilität, sogenannte Primärstabilität, sorgen. Durch Umbauvorgänge und Einwachsen des Knochens in Mikrostrukturen, die durch Oberflächenrauhigkeiten in diesen Knochenverankerungsabschnitt gebildet werden und die Makrorauhigkeiten, die durch das Gewinde gebildet werden, kann die Verankerung des Zahnimplantats weiter und dauerhaft verbessert werden und so eine hohe permanente Verankerung, sogenannte Sekundärstabilität, erzielt werden.

An die Gewindegeometrie, die im Bereich einer Knochenverankerungsoberfläche eines solchen Zahnimplantats ausgebildet ist, werden dabei spezifische Anforderungen gestellt. Während ursprünglich bei Zahnimplantaten noch Gewindegeometrien eingesetzt wurden, die bekannten Gewindegeometrien von mechanischen Konstruktionselementen wie Maschinenschrauben oder Holzschrauben nachempfunden waren, ist die Entwicklung bei heutzutage eingesetzten Zahnimplantaten dahingegangen, die Gewindegeometrie in spezifischer Weise an die Eigenschaften des Knochenmaterials, in dem das Gewinde verankert wird, anzupassen. Darüberhinaus wird bei der Gestaltung der Gewindegeometrie für heutzutage eingesetzte Zahnimplantate die spezifische Belastungssituation eines Zahnimplantats berücksichtigt. Diese Belastungssituation ist durch hohe Druckkräfte in Längsrichtung auf das Zahnimplantat charakterisiert, gepaart mit radial wirkenden Kräften, die durch Biegemomente und seitliche Krafteinwirkung auf das Zahnaufbauteil hervorgerufen werden und unterscheiden sich hierdurch maßgeblich beispielsweise von den Belastungssituationen, die auf Osteosyntheseschrauben einwirken. Solche Osteosyntheseschrauben werden zwar ebenfalls in Knochenmaterial verankert, müssen jedoch vorwiegend Zugkräfte in Längsrichtung aufnehmen, gepaart mit Scherkräften in radialer Richtung

Eine besondere Herausforderung an die Gestaltung der Geometrie der Knochenverankerungsoberfläche stellt die Inhomogenität des Knochens sowie die unterschiedliche Knochenqualität dar. Grundsätzlich weist jeder Kieferknochen eine Inhomogenität auf, die dadurch gekennzeichnet ist, dass zur Oberfläche des Knochens hin eine dichtere Knochensubstanz vorliegt als im Inneren des Kieferknochens der eine porösere Knochensubstanz aufweist. Diese Inhomogenität kann sich jedoch durch Umbauvorgänge um einen Fremdkörper wie ein Implantat verändern, was bei der Gestaltung der Geometrie der Knochenverankerungsoberfläche zu berücksichtigen ist. Die Verteilung von dichten und weniger dichten Knochenanteilen in dieser Inhomogenität kann von Patient zu Patient verschieden sein und ist auch von Zahnposition zu Zahnposition in einem Kieferknochen verschieden. Die Knochenqualität selbst kann von Patient zu Patient ebenfalls verschieden sein, ebenso die Fähigkeit, ein Zahnimplantat durch U m wachse n fest zu integrieren. Moderne Zahnimplantate sollten hierbei so ausgelegt sein, dass sie vom jungen Traumapatienten ebenso wie für einen älteren Patienten mit geplantem Zahnersatz ein e gute Primär- und Sekundärstabilität bereitstellen.

Aus EP 0668751 B1 ist ein Zahnimplantatsystem bekannt, bei dem die Knochenverankerungsoberfläche i n einen apikalen, zylindrischen Abschnitt und einen koronalen, konischen Abschnitt aufgeteilt ist. In diesem konischen Abschnitt ist eine Mikrorauhigkeit in Gestalt eines Mikrogewindes oder umlaufender Nuten vorgesehen. In der apikalen Knochenverankerungsoberfläche dieses Zahnimplantats ist ein konventionelles, selbstschneidendes Gewinde vorgesehen.

Aus EP 2145600 A1 ist eine andere Geometrie eines Zahnimplantats bekannt. Bei diesem Zahnimplantat ist eine Knochenverankerungsoberfläche vorgesehen, die ein Außengewinde auf der Knochenverankerungsoberfläche aufweist, dass wiederum selbstschneidend ist. Die Geometrie dieser Knochenverankerungsobrerfläche ist leicht konisch, und zwar sowohl hinsichtlich der äußeren Umhüllenden im maximalen Außendurchmesse r der Gewindespitzen als auch hinsichtlich des Gewindegrundes. Dieses Gewinde in der Knochenverankerungsoberfläche dient sowohl zur Verankerung im poröseren tieferen Knochenabschnitt als auch im dichteren, oberflächlichen Knochenanteil. Das Implantat weist darüber hinaus einen Weichgewebeabschnitt auf, in dem mehrere umlaufende Nuten angeordnet sind, die einen dichten Verschluss zum Weichgewebe befördern sollen, um das Eindringen von Bakterien in die Grenzfläche zwischen Implantat und Knochen zu verhindern.

Aus EP 0646362 B1 ist ein weiteres Schraubimplantat bekannt. Bei diesem Schraubimplantat ist die Knochenverankerungsoberfläche in einen apikalen und einen koronalen Abschnitt unterteilt. Im apikalen Abschnitt ist ein Gewinde mit großer Gewindetiefe vorgesehen und im koronalen Abschnitt ein Gewinde geringerer Gewindetiefe.

Aus EP 2 510 899 A1 ist ein Implantat mit einer Gewindestruktur auf seiner Umfangsfläche bekannt. In diesem Dokument werden mehrere Ausführungsformen mit unterschiedlichen Gewindegeometrien gezeigt, worunter auch zwei Gewindegeometrien mit steilem Flankenwinkel des Gewindes enthalten sind. In Bezug auf den Flankenwinkel wird für einen Bereich von 10° bis 35° ein bestimmter Verrundungswinkel der Gewindespitzen und für einen Flankenwinkelbereich von 35° bis 55° ein demgegenüber kleinerer Verrundungsradius der Gewindespitzen angegeben.

Aus FR 2 942 952 A1 ist ein Implantat bekannt, welches ein Grobgewinde und ein Feingewinde aufweist. Für das Grobgewinde wird ein Flankenwinkel zwischen 20° und 40° angegeben, für das Feingewinde wird ein Flankenwinkel zwischen 50° und 70° angegeben.

Zwar ist mit Implantaten dieser so vorbekannten Bauformen in vielen Anwendungsfällen eine gute Primär- und Sekundärstabilität erreichbar. Es hat sich aber gezeigt, dass die Belastbarkeit des Implantats noch weiter verbesserungswürdig ist und insbesondere für außergewöhnliche Knochenqualitäten und Knochenihomogenitäten eine oftmals nicht ausreichende Primär- und Sekundärstabilität durch Implantate mit diesen Ausgestaltungen der Knochenverankerungsoberfläche erzielt werden kann.

Aufgabe der Erfindung ist es daher, ein Zahnimplantat bereitzustellen, welches eine verbesserte Primär- und Sekundärstabilität auch bei schlechter Knochenqualität und ungünstigen Inhomogenitäten des Kieferknochens im Implantationsbereich bereitstellt.

Diese Aufgabe wird erfindungsgemäß gelöst mit einem Zahnimplantat nach Anspruch 1.

Das erfindungsgemäße Zahnimplantat beruht auf der Erkenntnis, dass die Gewindegeometrien bislang eingesetzter Zahnimplantate sich hinsichtlich bestimmter geometrischer Eigenschaften i n einer für den Knochen nicht gut angepassten Wei se an Gewindegeometrien orientieren, die für andere Werkstoffe, wie beispielsweise Holz oder metallische Werkstoffe eingesetzt werden. Während es bei solchen Schrauben mit Gewindegeometrie für Holz oder Metall in der Regel vorteilhaft ist, wenn ein Flankenwinkel von mehr als 30°, insbesondere ein Flankenwinkel von 45° oder mehr vorgesehen ist, um zum Bei spiel hierdurch Toleranzfehler zwischen Außengewinde und Innengewinde bei Anwendung in Metall ausgleichen zu können und ein Verklemmen der Schraube zu verhindern und um bei Holzschrauben festigkeitsvermindernde Schneid- und Korbwirkungen durch eine scharfe Kante zwischen dem Außendurchmesser und dem Flankenabschnitt zu vermeiden, ist dies eine für den Knochen weder benötigte noch vorteilhafte Geometrie. Der Erfinder hat erkannt, dass durch einen solchen Flankenwinkel von mehr als 30° und insbesondere mehr als 45 °die Widerstandsfähigkeit des Zahnimplantats im Implantat-Knochen-Interface gegen axiale Kräfte maßgeblich reduziert wird, weil der Knochen im Anlagerungsbereich an das Zahnimplantat nennenswerte elastische Eigenschaften im mikroskopischen Bereich aufweist. Durch diese elastischen Eigenschaften kann der Knochen bei Aufbringen eines axialen Drucks aus dem Nutbereich durch eine Keilwirkung herausgedrückt werden, dieser Vorgang wird durch einen Flankenwinkel von mehr als 30° und insbesondere noch größere Flankenwinkel in einem erheB1ichen, ungünstigen Ausmaß ermöglicht und verstärkt.

Die Erfindung beruht dabei auf der Erkenntnis, dass durch große Flankenwinkel die Spannungsspitzen im Knochen nicht reduziert werden können. Die erfindungsgemäß erreichte Reduzierung der Spannungsspitzen im Knochen beruht bei den vorgesehenen kleinen Flankenwinkeln im Wesentlichen darauf, dass in der mechanischen Interaktion zwischen dem Implantat mit einem hohen Elastizitätmodul gegenüber dem Knochen die Kraft von der Nut über die Flanke in den Knochen geführt werde n kann. Der in der Nut liegende Knochen wird dadurch entlastet.

Bei dem erfindungsgemäßen Zahnimplantat ist die koronal liegende, zweite Knochenverankerungsoberfläche ausgebildet, um einem solchen Versagungsmechanismus vorzubeugen. Hierzu sind in dieser zweiten Knochenverankerungsoberfläche Nuten vorgesehen, die eine vorbestimmte Tiefe von mehr als 40 µm aufweisen und die eine n Winkel der Nutflankenflächen von weniger als 30° zur radialen Richtung haben. Die Nutflankenflächen sind hierbei steiler ausgerichtet als dies bei bekannten Zahnimplantaten der Fall ist, wodurch neben den zuvor beschriebenen Entlastungswirkungen in der Kraftübertragung zwischen Implantat und Knoche n auch eine Keilwirkung bei Druckeinwirkung in axialer Richtung auf das Zahnimplantat vermindert und so das Herausdrücken von eingewachsenen Knochenanteilen aus der Nut reduziert wird.

Ein vorteilhaftes Merkmal der Erfindung ist, dass das Mikrogewinde bzw. die Nuten die mechanischen Spannungen im Knochen während und nach dem Einwachsen des Knochens (Osseointegration) minimieren kann, indem sich in den (Gewinde-) nuten Bereiche ergeben, an denen der Knochen eine Reduzierung der mechanischen Spannungen erfährt, gegenüber einem Implantat ohne Mikrogewinde oder mit einem Gewinde bzw. Nuten mit größeren Abmessungen (Nuttiefe und - breite). Das Mikrogewinde bzw. die Nuten sind biomechanisch so ausgelegt, dass für weichen und harten Knochen minimale mechanische Spannungen entstehe n. Da zu ist die Geometrie der Nut und der Flanken so gestaltet (wenn der erste Knochenkontakt in der Nut erfolgt), dass die Spannungsspitzen am ersten Kontakt des Implantates mit dem Knochen durch die Krafteinleitung über die Gewindeflanken niedrig Bleibt (Flankenwinkel < 30 Grad). Vorteilhaft ist es weiterhin, wenn gleich zeitig die Spannungen an der Gewindeflanke durch eine Abrundung an der Gewindeflanke ebenfalls reduziert sind.

Grundsätzlich ist es bevorzugt, dass die Flankenfläche der Nut einen geraden Verlauf hat, zumindest im äußeren Bereich über die Hälfte der Nuttiefe einen geraden Verlauf hat. Der Winkel der Nutflankenflächen (oder nachfolgend auch Flankenwinkel genannt) ist dann definiert als der Winkel zwischen dieser gradlinigen Fläche und der radial auswärts gerichteten Richtung, die senkrecht zur axialen Längsachse des Zahnimplantats steht. Alternativ kann die Nutflankenfläche aber auch insgesamt gekrümmt sein oder gekrümmte Abschnitte aufweisen. Bei einer solchen Gewindegeometrie ist der Flankenwinkel nach der erfindungsgemäßen Gewindegeometrie definiert als der Winkel zwischen der Sekante, die die Nutflankenfläche an ihrem äußersten Punkt und in der Hälfte der Nuttiefe schneidet und der radialen Richtung senkrecht zur axialen Längsachse. Bei gekrümmt verlaufenden Nutflankenflächen von Nuten, die sowohl nach außen als auch im Nutgrund verrundet sind, ist der Winkel der Nutflankenfläche definiert als der Winkel zwischen der radialen Richtung senkrecht zur Längsachse und der Tangente im Wendepunkt zwischen der Ausrundung der Nut im Nutgrund und der außenliegenden Abrundung der Nutflanke.

Die Nutflankenfläche weist vorzugsweise einen gradlinigen Flankenabschnitt auf, der sich vom äußersten Punkt der Nut bis mindestens zur Hälfte der Nuttiefe erstreckt, insbesondere bis über Zweidrittel der Nuttiefe oder bis zur Nutgrundfläche erstreckt, wobei zu verstehen ist, dass eine Verrundung mit einem Radius, der kleiner als ein Fünftel der Nuttiefe ist, im Übergang zwischen Nutgrundfläche und Nutflankenfläche zur Vermeidung einer Kerbwirkung nicht als ein gekrümmter Abschnitt der Nutflankenfläche im Sinne der Erfindung zu verstehen ist.

Die zweite Knochenverankerungsoberfläche weist weiterhin bevorzugt zwischen den Nuten einen gradlinigen, sich in axialer Richtung erstrecken den Flächenabschnitt auf. Dieser Flächenabschnitt ist vorzugsweise zylindrisch ausgebildet, kann jedoch auch konisch oder verrundet ausgebildet sein. Bevorzugt ist die zweite Knochenverankerungsoberfläche rotationssymmetrisch um die axiale Mittellängsachse des Zahnimplantats. Die zweite Knochenverankerungsoberfläche weist vorzugsweise in ihrem außenliegenden Umfangsabschnitt eine gradlinige, zylindrische oder konische umhüllende Oberfläche auf, die sich zwischen den Nuten erstreckt und keine gekrümmten Anteile aufweist.

Erfindungsgemäß hat sich gezeigt, dass ein Flankenwinkel von 30° oder weniger als 30° eine gute Widerstandsfähigkeit des Zahnimplantats gegenüber Druckkräften in axialer Richtung herstellt und zugleich keine hohe Kerbwirkung im Implantatmaterial selbst bewirkt und folglich eine konstruktive Schwächung des Zahnimplantats im Bereich der Nuten vermeidet. Bei bestimmten Ausgestaltungen kann aber auch e in noch kleinerer Flankenwinkel vorteilhaft sein. Erfindungsgemäß kann das Zahnimplantat daher fortgebildet werden, indem der Winkel zwischen der Nutflankenfläche und der Radialrichtung kleiner als 20°, kleiner als 10°, kleiner als 5° oder 0° ist.

Die Verringerung des Flankenwinkels ist grundsätzlich vorteilhaft, um hierdurch die Widerstandsfähigkeit des Zahnimplantats gegenüber axialen Druckkräften zu erhöhen. Sie wird jedoch dadurch begrenzt, dass hierdurch ein zunehmend spitzer Winkel zwischen der Flankenfläche und der außenliegenden Oberfläche in der zweiten Knochenverankerungsoberfläche erzeugt wird einerseits und andererseits ein zunehmend spitzer Winkel zwischen der Nutgrundfläche und der Nutflankenfläche resultiert. Durch solche spitzen Winkel kann eine Kerbwirkung in dem Zahnimplantat resultieren, die eine konstruktive Materialschwächung darstellt und insbesondere vor dem Hintergrund einer Dauerwechselbeanspruchung des Zahnimplantats in diesem Bereich nachteilig ist. Es ist daher bevorzugt, den Flankenwinkel größer als 0°, größer als 5°, größer als 10° und insbesondere größer als 20° zu wählen, um diesen Nachteil zu vermeiden.

Ein optimiertes, erfindungsgemäßes Zahnimplantat kann daher einen Flankenwinkel aufweisen, der in einem Bereich liegt, der durch die vorgenannten Obergrenzen und Untergrenzen beschränkt ist.

Die Nuttiefe ist zu verstehen als der Abstand zwischen der Umhüllenden und dem Nutgrund. Diese beträgt erfindungsgemäß mehr als 40 Mikrometer und insbesondere liegt die Nuttiefe oberhalb von 50, 60, 70 oder 80 Mikrometer. Die Nuttiefe soll erfindungsgemäß einen Wert von 80 Mikrometer, 90, 100, 120, 150, 200, Mikrometer nicht überschreiten.

Gemäß einer Ausführungsform ist vorgesehen, dass die zweite Knochenverankerungsoberfläche mindestens drei in Umfangsrichtung der Knochenvernkerungsoberfläche axial voneinander beabstandete umlaufende Nuten oder eine in Umfangsrichtung der Knochenverankerungsoberfläche umlaufende Gewindenut mit mindestens drei Gewindegängen aufweist. Durch die Anordnung von zumindest drei umlaufenden Nuten beziehungsweise drei Gewindegängen wird die Knochenverankerung im koronalen Bereich des Zahnimplantats verbessert, ohne dass hierfür eine Vertiefung der Nut beziehungsweise Erhöhung der Gewindetiefe notwendig ist und somit wird eine strukturelle Schwächung des Zahnimplantats an dieser Stelle vermieden. Grundsätzlich ist zu verstehen, dass die umlaufenden Nuten in sich geschlossen sind wohingegen die Gewindegänge sich schraubenförmig in der zweiten Knochenverankerungsoberfläche befinden. Die Gewindegänge können durch ein eingängiges Gewinde bereitgestellt werden, bei dem Gewindesteigung gleich Gewindeteilung ist. Ebenso kann aber auch ein zweigängiges Gewinde, bei dem die Gewindesteigung der halben Gewindeteilung entspricht oder ein Gewinde mit drei oder mehr Gängen, bei dem die Gewindesteigung ein entsprechendes Vielfaches der Gewindeteilung ist, vorgesehen sein.

Weiterhin ist es bevorzugt, dass das Zahnimplantat, bis auf das Gewinde bzw. die Gewindenut, um eine sich in Längsrichtung erstreckenden Mittellängsachse rotationssymmetrisch ist und vorzugsweise die erste und die zweite Knochenverankerungsoberfläche eine zylindrische oder konische Umhüllende aufweisen. Durch eine solche, bis auf das Gewinde bzw. die Gewindenut, rotationssymmetrische Geometrie wird das Implantieren des Zahnimplantats durch eine Eindrehbewegung mittels Einschrauben ermöglicht, was sich als zuverlässige Implantationsmethode erwiesen hat. Es ist besonders bevorzugt, die erste Knochenverankerungsfläche mit einer konischen Umhüllenden auszuführen die zweite Knochenverankerungsfläche mit einer zylindrischen Umhüllenden. Unter einer Umhüllenden ist hierbei die Fläche zu verstehen, welche den maximalen Außendurchmesser des in dem jeweiligen Oberflächenabschnitt definiert. Die Umhüllende kann dabei in einem Längsschnitt des Zahnimplantats als Verbindungslinie zwischen den jeweils außenliegenden Grenzflächen der jeweiligen Knochenverankerungsoberfläche gesehen werden.

Es ist zu verstehen, dass sich die zylindrische oder konische Gestaltung insbesondere auf diese Umhüllende, also die maximalen Außenabmessungen des Implantats beziehen kann. In bestimmten Ausführungsformen ist es aber auch vorteilhaft, wenn der Verlauf eines Gewindegrundes eines Gewindes, das in eine Knochenverankerungsoberfläche geschnitten ist oder der Verlauf der Nutgrunde in einer Knochenverankerungsoberfläche in axialer Richtung konisch oder zylindrisch ist. Grundsätzlich wird durch einen konischen Verlauf der Umhüllenden oder des Gewindegrundes/Nutgrund es eine Verdrängung und damit Verdichtung des Knochenmaterials bewirkt, wenn die vorbereitete Knochenbohrung zylindrisch und kleiner ist als der größte Außendurchmesser beziehungsweise Gewindegrund- oder Nutgrunddurchmesser des Implantats in diesem konischen Bereich. Zudem ermöglicht eine konische Ausführung von Umhüllender oder Gewinde- /Nutgrundverlauf eine konische Vorbereitung der Knochenbohrung, wodurch das Implantat in einer axial gerichteten translatorischen Bewegung in diese konische Bohrung eingesetzt werden kann und mit nur wenigen Umdrehungen darin festgesetzt werde n kann. Dies wird in vielen Anwendungsfällen als vorteilhaft angesehen, um eine Traumatisierung der Knochengrenzfläche im Implantatbereich durch einen längeren Eindrehvorgang über mehrere volle Umdrehungen zu vermeiden.

Insbesondere ist es bevorzugt, wenn die zweite Knochenverankerungsoberfläche eine äußere zylindrische Umhüllende aufweist. Durch eine solche zylindrische Umhüllende in der zweiten Knochenverankerungsoberfläche wird eine besonders stabile und gegen Herausziehen widerstandsfähige Gestaltung der Oberfläche in dem Bereich des dichteren Knochengewebes bereitgestellt, gepaart mit einem vorteilhaften Implantationsvorgang mir nur wenigen Umdrehungen, wenn die erste Knochenverankerungsoberfläche eine konische Umhüllende aufweist.

Noch weiter ist bevorzugt, dass die erste Knochenverankerungsoberfläche ein Gewinde aufweist, insbesondere ein Gewinde dessen Gewindetiefe größer ist als die Tiefe der Nut in der zweiten Knochenverankerungsoberfläche. Ein solches Gewinde, insbesondere ein Gewinde mit größerer Gewindetiefe als die Tiefe der Nut in der zweiten Knochenverankerungsoberfläche, ist besonders vorteilhaft, um auch in dem weniger dichten Knochengewebebereich im apikalen Bereich des Zahnimplantats eine wirksame mechanische Verankerung zu erzielen und eine für den implantierenden Operateur praktikable und sichere Implantationsmethode zu eröffnen.

Erfindungsgemäß ist vorgesehen, dass die zweite Knochenverankerungsoberfläche zumindest zwei umlaufende Nuten oder eine umlaufende Gewindenut mit zumindest zwei Windungen aufweist und zwischen den radial auswärtsgelegenen Enden der Nutflankenflächen einer Nut oder Windung eine Nutbreite ausgebildet ist, und zwischen den radial auswärts gelegenen Enden der Nutflankenflächen einander benachbarter Nuten oder Windungen ein Steg mit einer Stegbreite ausgebildet ist, und dass die Stegbreite mindestens halb so groß ist wie die Nutbreite. Mit dieser Fortbildung wird ein bestimmtes Verhältnis in der Geometrie der Nutbreite zur Stegbreite in der zweiten Knochenverankerungsfläche definiert. Dabei ist die Stegbreite zu verstehen als derjenige Flächenbereich, der nicht die Nutflankenflächen und den Nutgrund beinhaltet. Die Nutbreite hingegen umschließt die Nutflankenflächen und den Nutgrund. Sowohl die Nutbreite als auch die Stegbreite sind ein Maß, dass in axialer Richtung gemessen ist. Typischerweise liegt kurz nach Implantation eines Zahnimplantats eine verdichtete Knochensubstanz im Bereich der ) Stegbreite, also dem äußeren Um fang der zweiten Knochenverankerungsoberfläche an und sorgt für eine Primärstabilität, wohingegen unmittelbar postoperativ die Nut nicht mit belastbarem Knochensubstanzmaterial gefüllt ist. Im Verlauf des Einheilvorgangs jedoch verfestigt sich das Knochenmaterial im Nutgrund beziehungsweise wächst in den Nutgrund hinein und stellt dann aufgrund der formschlüssigen Verankerung eine besonders gute mechanische Sicherung gegen Druckkräfte in axialer Richtung auf das Zahnimplantat dar. Um solche Druckkräfte im Zusammenspiel mit der steilen Nutflankenfläche wirksam aufnehme n zu können, muss die Knochenstruktur eine bestimmte maximale Breite in axialer Richtung aufweisen beziehungsweise nicht unterschreiten.

Bei der Festlegung des Verhältnisses von Stegbreite zu Nutbreite muss daher eine sorgfältige Abwägung zwischen der angestrebten Primärstabilität und Sekundärstabilität des Zahnimplantats getroffen werden. Während eine größere Stegbreite für die Primärstabilität von Vorteil ist, kann die dann resultierende geringe Nutbreite hinsichtlich der Sekundärstabilität nür unzureichend gegenüber hohen Druckkräften i n axialer Richtung Kräfte aufnehmen. Es hat sich erfindungsgemäß herausgestellt, dass der steile Flankenwinkel. und die zuvor erläuterte Nuttiefe besonders vorteilhaft sind, wenn die Stegbreite halb so groß ist wie die Nutbreite. Für bestimmte Anwendungen, insbesondere bei besonders guten oder besonders schlechten Knochenqualität im Bereich der zweiten Knochenverankerungsoberfläche, können jedoch erfindungsgemäß auch andere Verhältnisse eingestellt werden. Insbesondere kann die Stegbreite mehr als halb so groß wie die Nutbreite sein, beispielsweise kann sie mindestens 60, 70 oder 80 % der Nutbreite einnehmen. Die Stegbreite kann beispielsweise auch mindestens100, 120 oder 150% der Nutbreite einnehmen. Zahnimplantate mit dieser Geometrie zwischen Steg- und Nutbreite sind für eine höhere Primärstabilität vorteilhaft. Demgegenüber sind Zahnimplantate, die eine höhere Sekundärstabilität aufweisen sollen, in vorteilhafterweise erfindungsgemäß so zu gestalten, dass die Stegbreite höchstens halb so groß ist wie die Nutbreite, insbesondere kann die Stegbreite höchstens 40, 30 oder höchstens 20% der Nutbreite betragen.

Weiterhin ist es bevorzugt, dass die zweite Knochenverankerungsoberfläche zumindest zwei umlaufende Nuten oder ein umlaufendes Gewinde mit zumindest zwei Windungen aufweist und zwischen den radial auswärts gelegenen Enden der Nutflankenflächen einer Nut eine Nutbreite ausgebildet ist, und zwischen den radial auswärts gelegenen Enden der Nutfankenflächen einander benachbarter Nuten ein Steg mit einer Stegbreite ausgebildet ist, und dass die Summe aus Stegbreite und Nutbreite nicht größer als 0,6 mm ist.

Mit dieser Ausführungsform wird wiederum, unter gleicher Definition von Stegbreite und Nutbreite wie der voranstehend erläuterten Ausführungsform eine vorteilhafte Geometrie hinsichtlich der Dimension von Stegbreite und Nutbreite definiert. Gemäß dieser Ausführungsform nehmen Stegbreite und Nutbreite einer Nut und eines hierzu benachbarten Steges eine axiale Länge von nicht mehr als 0,6mm ein. Durch diese Beschränkung der maximalen Abmessung der Summe von Stegbreite und Nutbreite eines benachbarten Nut- Steg-Paares wird erreicht, dass eine spezifisch feine Nutgestaltung in der zweiten Knochenverankerungsoberfläche ausgebildet ist. Eine solche feine Nutgeometrie hat sich als besonders widerstandsfähig gegenüber axialen Druckkräften erwiesen. Es ist zu verstehen, dass bei Zahnimplantaten für bestimmte Knochenqualitäten es auch vor teilhaft sein kann, wen n die Summe aus Stegbreite und Nutbreite nicht größer als 0,2 mm, nicht größer als 0,3 mm, nicht größer als 0,4 mm, nicht größer als 0,5 mm oder nicht größer als 0,6 mm ist.

Weiterhin ist zu verstehen, dass es vor teilhaft ist, wenn die Summe aus Stegbreite und Nutbreite mindestens größer als 0, 1 mm ist oder die Summe aus Stegbreite und Nutbreite 0,2 mm, 0,3 mm oder 0,4 mm nicht unterschreitet.

Gemäß einer weiteren bevorzugten Ausführungsform ist vorgesehen, dass das Zahnimplantat durch eine koronale Stirnfläche begrenzt wird und die koronale Stirnfläche ein en Abstand zu dem der koronalen Stirnfläche am nächsten liegenden ) radial auswärts gelegenen Ende der Nutflankenfläche aufweist, der kleiner als 2 mm ist. Die koronale Stirnfläche des Zahnimplantats begrenzt das Zahnimplantat nach koronal und dient typischerweise als Auflagefläche für einen Implantataufbau. Sie kann zugleich die Grenze definieren, bis zu der das Zahnimplantat in den Knochen eingeschraubt werden soll, dass heißt die koronale Stirnfläche definiert die Knochenoberfläche. Um bei einer solchen Implantationsweise mit dem erfindungsgemäßen Zahnimplantat- Design eine zuverlässige Verankerung der Nuten in der zweiten Knochenverankerungsoberfläche im Bereich des dichten Knochengewebes zu erzielen ist es vorteilhaft, wenn diese Nuten einen vorbestimmten Abstand von 2 mm zu dieser koronalen Stirnfläche beziehungsweise Knochengrenzfläche nicht überschreiten, also möglich nahe an der koronalen Stirnfläche liegen. Dabei ist der Abstand so definiert, dass er bis zum Beginn der Nutflankenfläche gemessen wird, die am weitesten koronal liegt beziehungsweise bis zum Ende eines die Nut darstellenden Gewindes, wobei als End e hierbei derjenige Bereich des Gewindes zu verstehen ist, der die volle Gewindetiefe aufweist und nicht ein etwaig auslaufender Gewindeteil mit sich verringernder Gewindetiefe. Grundsätzlich können auch Ausführungsformen vorteilhaft sein, bei denen dieser Abstand weniger als 2 mm ist, insbesondere sind auch Ausführungsformen vorteilhaft, bei denen der Abstand weniger a I s 1,8 mm, weniger als 1,6 mm, weniger als 1,4 mm, weniger als 1,2 mm, weniger als 1,0 mm, weniger als 0,8 mm, weniger als 0,6 mm, weniger als 0,5 mm, weniger als 0,4 mm, weniger als 0,3 mm oder weniger als 0,25 mm beträgt. Bei bestimmten Implantatonsorten, insbesondere dann, wenn in Kieferknochenbereich implantiert wird, die einen ausgeprägten und in Implantationsrichtung tief hineinreichenden dichten Knochen gewebeabschnitt aufweisen, können auch größere Abstände von Vorteil sein, insbesondere kann in solchen Fällen der Abstand so gewählt werden, dass er nicht kleiner als 2,2 mm ist, nicht kleiner als 2,4 mm ist oder nicht kleiner als 3 mm ist.

Es ist weiterhin bevorzugt, wenn der Gewindegrund verrundet ist.

Dabei kann sich vorzugsweise der Gewindegrund mittels einer durchgehenden konkaven Wölbung von einer Flankenfläche zu der anderen Flankenfläche der Nut erstrecken.

Durch diese Fortbildungen mit Verrundung des Nutgrundes wird eine lokale Knochenspannungsspitzen vermindernde bionische Gestaltung des Implantats im lasttragenden koronalen Abschnitt erzielt und es dem Knochen in folge seines im Vergleich zum Implantat geringeren Elastizitätsmoduls ermöglicht, spannungsreduziert innerhalb der Nut einzuwachsen bzw. nach Einwachsen zu verankern. Es kann vorgesehen sein, dass das erfindungsgemäße Zahnimplantat eine rauhe Oberfläche aufweist. Eine solche Oberflächenrauhigkeit kann beispielsweise durch eine Ätzung oder Strahlbehandlung der Oberfläche des Zahnimplantates erzeugt sein. Die Oberflächenrauhigkeit des Zahnimplantates hat den Vorteil, dass das Knochengewebe einen besseren Halt im Zahnimplantat findet. Bei der Erzeugung der Oberflächenrauhigkeit, insbesondere durch Ätzung oder Strahlung, können gleichzeitig auch Kanten des Zahnimplantates verrundet werden.

Eine bevorzugte Ausführungsform des erfindungsgemäßen Zahnimplantats wird anhand der beiliegenden Figuren näher erläutert. Es zeigen
Fig. 1 eine Seitenansicht eines erfindungsgemäßen Zahnimplantats vor Schaffung einer Oberflächenrauhigkeit.
Fig. 2 eine schematische Ansicht eines Ausschnitts aus einer CAD- Darstellung des erfindungsgemäßen Zahnimplantates, welches eine bevorzugte Gestaltung der Nut in der zweiten Knochenverankerungsoberfläche des Zahnimplantats gemäß Figur 1 abbildet.

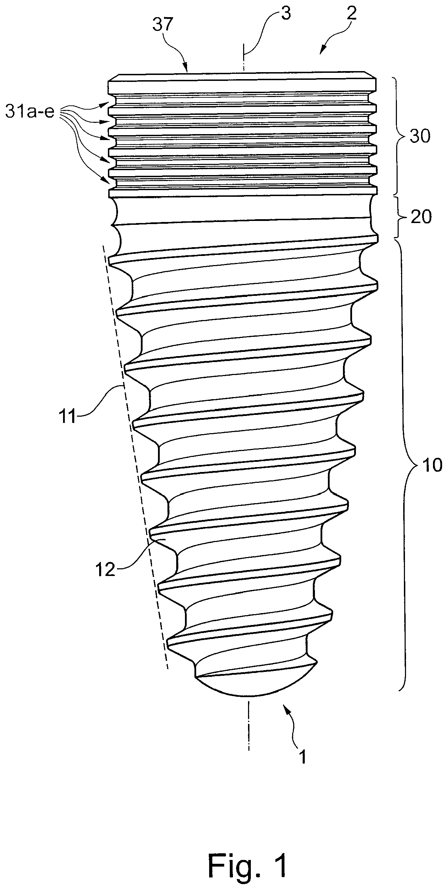

Das in Figur 1 abgebildete Zahnimplantat weist ein apikales Ende 1 und ein koronales Ende 2 auf. Ausgehend vom apikalen Ende 1 erstreckt sich ein erster Knochenverankerungsabschnitt 10 mit einer ersten Knochenverankerungsoberfläche. Diese Knochenverankerungsoberfläche wird durch ein eingängiges Grobgewinde 12 gebildet und ist definiert als die Oberflächen der Nutflankenflächen, des Nutgrundes und der Stegflächen dieses eingängigen Gewindes 12.

Die Umhüllende 11 im Bereich dieser ersten Knochenverankerungsoberfläche weist einen konischen Verlauf auf mit einer konischen Erweiterung von apikal nach koronal. Dieser konische Verlauf ist gleichmäßig, das heißt die Steigung des Verlaufs ändert steh über die gesamte Länge des ersten Knochenverankerungsabschnitts 10 nicht.

Der erste Knochenverankerungsabschnitt 10 erstreckt sich bis zu einem Übergangsabschnitt 20, in dem das Gewinde 12 in der ersten Knochenverankerungsoberfläche ausläuft. Dieser Übergangsabschnitt 20 liegt zwischen dem ersten Knochenverankerungsabschnitt 10 und einem zweiten Knochenverankerungsabschnitt 30, der eine zweite Knochenverankerungsoberfläche aufweist. Die zweite Knochenverankerungsoberfläche weist insgesamt fünf umlaufenden Nuten 31a-e auf, die axial voneinander beabstandet sind. Die Nuttiefe dieser fünf Nuten 31 a-e ist für jede Nut gleich und ist kleiner als die Gewindetiefe des Gewindes 12 im ersten Knochenverankerungsabschnitt 10.

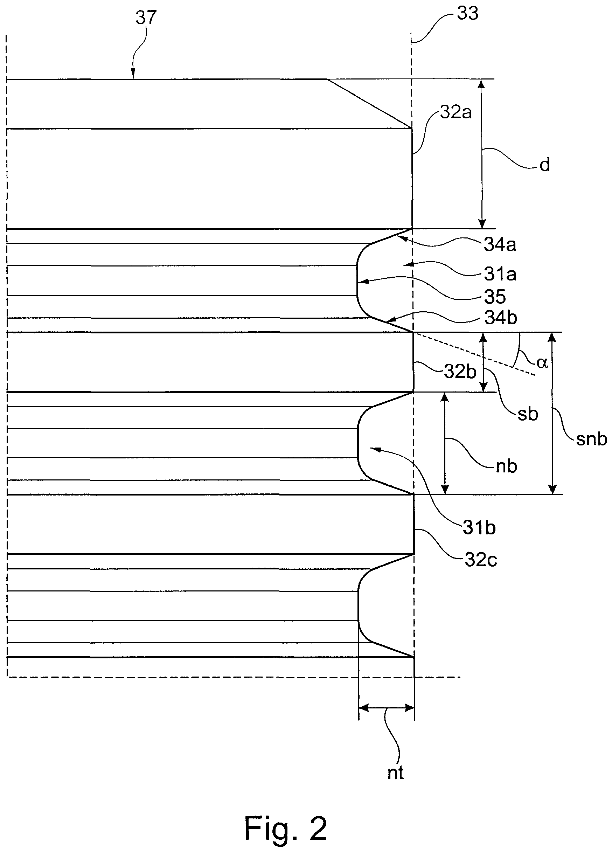

Die geometrische Gestaltung der Nuten 31 a-e in der zweiten Knochenverankerungsoberfläche wird nachfolgend anhand von Figur 2 näher beschrieben.

Wie aus Figur 2 ersichtlich ist, weist die zweite Knochenverankerungsoberfläche umlaufende und in sich geschlossene Stege 32a -c auf, die eine zylindrische äußere Oberfläche haben, die dem maximalen Außendurchmesser der zweiten Knochenverankerungsoberfläche entsprechen und daher die Umhüllende 33 definieren. Die Umhüllende 33 liegt in der zylindrischen Fläche, welche diese Oberflächen der umlaufenden Stege 32a -c umfasst.

Die Stege weisen eine einheitliche Breite in axialer Richtung auf, die in der Figur mit dem Maß sb gekennzeichnet ist.

Zwischen jeweils zwei benachbarten Stegen 32a-c ist eine Nut 31a, b ausgebildet. Diese Nut 31a, b wird durch zwei Nutflankenflächen 34a, b gebildet, die sich von jeweils jedem der beiden benachbarten Stege 32a-c in Richtung des jeweils anderen Stegs 32a-c hin erstreckt. Die Nutflankenflächen 34a, b sind in dem unmittelbar an die Stege 32 a-c anschließenden Flächenabschnitt in einer Längsschnittbetrachtung gradlinig ausgebildet. Der Winkel a zwischen diesem gradlinigen Abschnitt und der radial auswärtsgerichteten Richtung, die senkrecht zur Mittellängsachse 3 des Zahnimplantats liegt, beträgt bei der abgebildeten Ausführungsform 20°.

Die Nutflankenfläche 34a, b geht ausgehend von dem gradlinigen Abschnitt nach radial einwärts in einen gerundeten Verlauf über und endet an eine Nutgrundfläche 35, die eine zylindrische Oberflächengeometrie aufweist und deren Fläche parallel zur Mittellängsachse des Zahnimplantats liegt.

Die Nutbreite ist in Figur 2 als das Maß nb eingetragen und setz t sich zusammen aus der Breite der- beiden Nutflankenflächen 34a, b und des Nutgrundes 35 in axialer Richtung.

Die Nut weist weiterhin eine Nuttiefe auf. Diese Nuttiefe ist in Figur 2 als das Maß nt definiert und wird bestimmt als die Hälfte des Außendurchmessers der Stegoberfläche abzüglich der Hälfte des Außendurchmessers der Nutgrundoberfläche.

Wie weiter aus Figur 2 ersichtlich ist, ist die Summe aus Stegbreite sb und Nutbreite nb in der Figur als das Maß snb gekennzeichnet. Dieses Maß snb beträgt bei der dargestellten Ausführungsform 0,3 m.

Die Stegbreite sb beträgt 0, 1 mm, grundsätzlich ist es vorteilhaft, wenn die Stegbreite sb etwa der Nuttiefe nt entspricht. Die Nutbreite nb ist beim abgebildeten Ausführungsbeispiel 0,2 mm, so dass sich ein Verhältnis zwischen Nutbreite und Stegbreite v on 2 zu 1 ergibt.

Am koronalen Ende 2 des Zahnimplantates weist dieses ei ne koronale Stirnfläche 37 auf, die sich senkrecht zur Mittenlängsachse 3 des Zahnimplantates erstreckt.

Wie weiter aus Figur 2 ersichtlich ist, beträgt der Abstand zwischen der koronalen Stirnfläche 37 des Zahnimplantats zu dem der koronalen Stirnfläche 37 am nächsten liegenden radial auswärts gelegenen Ende der Nutflankenfläche 34a beim abgebildeten Ausführungsbeispiel etwa 200 µm, gekennzeichnet mit d.

## Patentansprüche

1. Zahnimplantat, mit einem sich in einer Längsrichtung von einem apikalen Ende zu einem koronalen Ende erstreckenden Implantatkörper, der eine sich von dem apikalen Ende bis zu einem zwischen dem apikalen und dem koronalen Ende liegenden Übergangsabschnitt (20) erstreckende erste Knochenverankerungsoberfläche, und eine sich von dem Übergangsabschnitt bis zu dem koronalen Ende erstreckende zweite Knochenverankerungsoberfläche (30) aufweist, die zumindest zwei umlaufende Nuten oder eine umlaufende Gewindenut mit zumindest zwei Windungen aufweist, welche in radial einwärts gerichteter Richtung durch eine Nutgrundfläche und in axialer Richtung beidseits durch sich von der Nutgrundfläche zu einer äußeren Oberfläche erstreckende Nutflankenflächen (34a, b) begrenzt wird, wobei
- die Tiefe (nt) der Nut (31a-e) in radialer Richtung größer als 40 Mikrometer und kleiner als 200 Mikrometer ist und
- der Winkel der Nutflankenflächen kleiner als 30° zur Radialrichtung ist,
- zwischen den radial auswärts gelegenen Enden der Nutflankenflächen einer Nut oder Windung eine Nutbreite ausgebildet ist, und
- zwischen den radial auswärts gelegenen Enden der Nutflankenflächen einander benachbarter Nuten oder Windungen ein Steg mit einer Stegbreite ausgebildet ist, und
- die Stegbreite mindestens halb so groß ist wie die Nutbreite.

2. Zahnimplantat nach Anspruch 1,
**dadurch gekennzeichnet, dass** die erste Knochenverankerungsoberfläche eine äußere von apikal nach koronal sich erweiternde, insbesondere konisch erweiternde Umhüllende aufweist.

3. Zahnimplantat nach Anspruch 1 oder 2,
**dadurch gekennzeichnet, dass** die zweite Knochenverankerungsoberfläche eine äußere zylindrische Umhüllende aufweist.

4. Zahnimplantat nach einem der vorhergehenden Ansprüche,
**dadurch gekennzeichnet, dass** die erste Knochenverankerungsoberfläche ein Gewinde aufweist, insbesondere ein Gewinde dessen Gewindetiefe größer ist als die Tiefe der zumindest zwei Nuten oder der umlaufenden Gewindenut in der zweiten Knochenverankerungsoberfläche.

5. Zahnimplantat nach einem der vorhergehenden Ansprüche,
**dadurch gekennzeichnet, dass** die Summe aus Stegbreite und Nutbreite nicht größer als 0,6 mm ist.

6. Zahnimplantat nach einem der vorhergehenden Ansprüche,
**dadurch gekennzeichnet, dass** das Zahnimplantat durch eine koronale Stirnfläche begrenzt wird und die koronale Stirnfläche einen Abstand zu dem der koronalen Stirnfläche am nächsten liegenden radial auswärts gelegenen Ende der Nutflankenfläche aufweist, der kleiner als 2 mm ist.

7. Zahnimplantat nach einem der vorhergehenden Ansprüche,
**dadurch gekennzeichnet, dass** die außenliegende Kante der Nutflankenfläche verrundet ist.

## Claims

1. A dental implant, comprising an implant body which extends in a longitudinal direction from an apical end to a coronal end and which has
a first bone anchoring surface extending from the apical end to a transition portion (20) lying between the apical and the coronal end and
a second bone anchoring surface (30) extending from the transition portion to the coronal end,
said second bone anchoring surface having at least two circumferential grooves or a circumferential thread groove with at least two windings,
said circumferential grooves or said circumferential thread groove being delimited in a radially inward direction by a groove bottom surface and on both sides in the axial direction by groove flank surfaces (34a, b) extending from the groove bottom surface to an outer surface,
wherein
- the depth (nt) of the groove (31a-e) in the radial direction is greater than 40 micrometers and smaller than 200 micrometers and
- the angle of the groove flank surfaces to the radial direction is less than 30°,
- a groove width is formed between the radially outward ends of the groove flank surfaces of a groove or a winding, and
- a web having a web width is formed between the radially outward ends of the groove flank surfaces of adjacent grooves or windings, and
- the web width is at least half of the groove width.

2. The dental implant according to claim 1,
**characterized in that** the first bone anchoring surface has an outer envelope flaring, in particular conically flaring, from apical to coronal.

3. The dental implant according to claim 1 or 2,
**characterized in that** the second bone anchoring surface has an outer cylindrical envelope.

4. The dental implant according to any one of the preceding claims,
**characterized in that** the first bone anchoring surface has a thread, in particular a thread with a depth of the thread which is greater than the depth of the at least two grooves or the circumferential thread groove in the second bone anchoring surface.

5. The dental implant according to any one of the preceding claims,
**characterized in that** the sum of web width and groove width is not greater than 0,6 mm.

6. The dental implant according to any one of the preceding claims,
**characterized in that** the dental implant is delimited by a coronal end face and said coronal end face is at a distance of less than 2 mm from the radially outward end of the groove flank surface which is closest to said coronal end face.

7. The dental implant according to any one of the preceding claims,
**characterized in that** the outer edge of the groove flank surface is rounded.

## Revendications

1. Implant dentaire avec un corps d'implant s'étendant dans une direction longitudinale depuis une extrémité apicale vers une extrémité coronale, qui présente une première surface d'ancrage osseux s'étendant depuis l'extrémité apicale jusqu'à une section de transition (20) située entre l'extrémité apicale et l'extrémité coronale et une deuxième surface d'ancrage osseux (30) s'étendant depuis la section de transition jusqu'à l'extrémité coronale, qui présente au moins deux rainures périphériques ou une rainure filetée périphérique avec au moins deux spires, laquelle est délimitée dans une direction dirigée vers l'intérieur radialement par une face de base de rainure et dans une direction axiale des deux côtés par des faces de flanc de rainure (34a, b) s'étendant depuis la face de base de rainure vers une surface extérieure,
dans lequel
- la profondeur (nt) de la rainure (31a - e) est dans la direction radiale supérieure à 40 micromètres et inférieure à 200 micromètres, et
- l'angle des faces de flanc de rainure est inférieur à 30° par rapport à la direction radiale,
- une largeur de rainure est réalisée entre les extrémités, placées vers l'extérieur radialement, des faces de flanc de rainure d'une rainure ou spire, et
- une entretoise avec une largeur d'entretoise est réalisée entre les extrémités placées vers l'extérieur radialement des faces de flanc de rainure de rainures ou spires adjacentes les unes aux autres, et
- la largeur d'entretoise est égale au moins à la moitié de la largeur de rainure.

2. Implant dentaire selon la revendication 1,
**caractérisé en ce que** la première surface d'ancrage osseux présente une extrémité enveloppante extérieure s'élargissant depuis le côté apical vers le côté coronal, en particulier s'élargissant de manière conique.

3. Implant dentaire selon la revendication 1 ou 2,
**caractérisé en ce que** la deuxième surface d'ancrage osseux présente une extrémité enveloppante cylindrique extérieure.

4. Implant dentaire selon l'une quelconque des revendications précédentes,
**caractérisé en ce que** la première surface d'ancrage osseux présente un filetage, en particulier un filetage dont la profondeur de filetage est supérieure à la profondeur des au moins deux rainures ou de la rainure filetée périphérique dans la deuxième surface d'ancrage osseux.

5. Implant dentaire selon l'une quelconque des revendications précédentes,
**caractérisé en ce que** la somme de la largeur d'entretoise et de la largeur de rainure n'est pas supérieure à 0,6 mm.

6. Implant dentaire selon l'une quelconque des revendications précédentes,
**caractérisé en ce que** l'implant dentaire est délimité par une face frontale coronale, et la face frontale coronale présente une distance par rapport à l'extrémité la plus proche de la face frontale coronale, placée vers l'extérieur radialement de la face de flanc de rainure, qui est inférieure à 2 mm.

7. Implant dentaire selon l'une quelconque des revendications précédentes,
**caractérisé en ce que** l'arête placée à l'extérieur de la face de flanc de rainure est arrondie.
